# EUROPEAN PATENT SPECIFICATION

(11) **EP 1 397 033 B1**
(45) Date of publication and mention of the grant of the patent: **04.10.2006**
(21) Application number: 02743301.0
(22) Date of filing: 19.06.2002
(51) Int. Cl.: A01C 1/06

(54) **COATED SEED AND PROCESS FOR COATING A SEED**
UMHÜLLTES SAATGUT UND VERFAHREN ZUM UMHÜLLEN VON SAATGUT
SEMENCE PELLICULEE ET PROCEDE D'ENROBAGE

(30) Priority: 21.06.2001 FI 20011328
(43) Date of publication of application: 17.03.2004
(73) Proprietor: Kemira GrowHow Oyj, 00181 Helsinki (FI)
(72) Inventor: PELTONEN, Jari, FIN-04330 Lahela (FI); SAARIKKO, Eija, FIN-02780 Espoo (FI)
(74) Representative: Svensson, Johan Henrik
(86) International application number: PCT/FI2002/000541
(87) International publication number: WO 2003/000030

(56) References cited:
- WO-A1-01/45489
- WO-A1-93/25078
- US-A- 4 761 423

## Description

The invention relates to a coated seed having a coating for improving phosphorus efficiency, and possibly also trace element efficiency, in the plant nutrients at the early stage of plant growth, and to a process for coating a seed and to a process for improving the phosphorus efficiency, and possibly also trace element efficiency of the plant, and for promoting plant growth at the early stage of plant growth.

The rapidity with which the roots of a plant reach the fertilizer has great significance for the ability of the plant to take up the nutrients present in the fertilizer and for the success of the initial development and growth of the plant in the first three weeks.

The quantity of the principal nutrients (N, K, P, Ca, S, Mg) passing from fertilizers into plants, i.e. the efficiency of nutrients, usually varies from a few per cent to 70 - 80 per cent. The efficiency of phosphorus in particular is low, approx. 5 - 20 %. The efficiency of trace elements (B, Co, Cu, Fe, Mn, Mo, Zn, Cl) is often even lower than this.

The method of spreading a fertilizer, i.e. how far from the seed the fertilizer is deposited, affects the ability of the plant to take up the nutrients. The nutrients in a fertilizer deposited far from a seed, for example, at a distance of 6 cm from it, may have time to react with soil minerals and form poorly soluble compounds even before the plant roots have reached the location of the fertilizer.

When, for example, phosphorus fertilization is carried out in the manner described above by conventional broadcasting of the fertilizer on the soil surface or by mixing it into the surface layer of the soil, the efficiency of the phosphorus is 5 - 10 %. If the fertilizer is spread by row application or tape application at a specified distance from the seed, the efficiency of the phosphorus is approx. 10 %.

A somewhat better phosphorus efficiency is achieved when the phosphorus fertilizer is deposited in the immediate vicinity of the seed or when the seed is coated with the fertilizer. In this case the efficiencies are, respectively, 15 % and 20 %.

The coating of plant seeds for various reasons has long been a known technology. There are different surface treatments, beginning from the simple and conventional seed dressing with biocides to combat plant diseases and noxious insects. In this case the seeds as such are treated with a fine-ground active agent or a powder mixture containing it, or the active agent is dissolved or slurried in a suitable solvent, often water or an organic solvent, and the seeds are then treated with the obtained solution or slurry.

Coating of seeds has also been used for delaying the germination of seeds. Polymers have been used as fixing agents also in the coating of seeds with substances having other effects. Coating may, for example, improve the ability of the seeds to withstand drought, heat, soil salinity, or other external stress factors.

With the help of coating, for example, lightweight seeds of rice can be rendered heavier, whereupon they will not be so easily carried by water or wind; see, for example, patent publication US 4,192,095.

It is also generally known to add nutrients to a coating in order to promote plant growth.

Grass seeds have been treated with, for example, lime or talc in order to ensure the establishment of a lawn (Scott 1975). The coating of seeds with nutrients is discussed in several studies (e.g. Heydecker and Coolbear 1977, Rebafka *et al.* 1983, Scott *et al.* 1987). The greatest problems have been a poor germination percentage of the seeds, especially when oil has been used as the fixing agent, and poor attachment of nutrients to the seed surface when aqueous solutions have been used.

A great deal of research has been conducted in order to solve these problems. Various fixing agent compositions have been experimented with for fixing nutrients or other growth-promoting substances or compositions to the surfaces of plant seeds.

In particular, the usability of various polymers has been experimented with. It is, for example, a known method to coat seeds with water-soluble polymers such as starch, methyl cellulose and gum arabic. The greatest disadvantage is the large amount of water associated with the use of these polymers. The handling of a large amount of water requires special apparatus, and the coating process is slow. In order to prevent the wetting of the seeds, the seeds must often be dried at a low temperature. The above-mentioned polymers often form a hard, easily breaking coat around the seeds.

Patent publication WO 9325078 describes a composition used for the coating of seeds, which composition contains a polysaccharide hydrolysate, for example, carboxymethyl cellulose or carboxymethyl starch hydroxylate. The aqueous solutions of these may also be sprayed in the form of relatively concentrated aqueous solutions (30 %) onto the seed surfaces.

The use of water-insoluble polymers, on the other hand, usually requires the use of an organic solvent, in which case a large solvent amount may promote the penetration of the polymer into the seed. It is also possible to use aqueous suspensions of these polymers for the treatment of seeds. For example, CA PLUS 112:17756 (PL 146138) and CA PLUS 122:49097 (PL 159474) describe such an application.

US patent publication 4,251,952 describes seeds coated with a mixture of a water-insoluble polymer and sugar. The polymers used are various commercial poly- or copolymers.

In addition to the disadvantages already stated above, the prior-known methods may also have the disadvantage of stickiness of the coated seed surfaces, causing the seeds to stick together and giving the seeds poor flow properties. The apparatuses required for the handling of the seeds also become easily soiled. A coating too moist, for its part, may cause premature germination of the seeds.

From the applicant's non-published application PCT/FI00/01143 there is known a seed coating that contains an aqueous fixing agent containing a fluid byproduct of agriculture or fermentation, in particular molasses, and possibly an emulsified oil, as well as a fertilizer powder. This publication describes results from field experiments, obtained with barley seeds coated with monopotassium phosphate as well as with tomato seeds coated with monopotassium phosphate and urea phosphate. With respect to this publication, the object of the present invention is to find for various plant species the optimal fertilizer and optimal fertilizer amount, which in interaction with the aqueous fixing agent produce an optimal synergic effect between the germination percentage and the phosphorus uptake.

US-A-4 761 423 discloses a seed with a coating comprising an aqueous fixing agent containing an animal or vegetable oil, as well as a fungicide or insecticide.

According to the present invention there is provided a coated seed having a coating for improving the efficiency of phosphorus in plant nutrients at an early stage of plant growth, the seed being a barley, wheat, sunflower, rape, pea or tomato seed, the coating comprising
i) an aqueous fixing agent containing a fluid byproduct of agriculture or fermentation selected from molasses, vinasse or syrup, or a mixture thereof, and possibly an emulsified oil, and
ii) a fertilizer powder, which is monopotassium phosphate for barley seed, monopotassium phosphate or monocalcium phosphate for wheat seed, monopotassium phosphate for sunflower seed, monocalcium phosphate or dicalcium phospate for rape seed, monocalcium phosphate or dicalcium phosphate for pea seed, or monopotassium phosphate or urea phosphate for tomato seed.

According to the invention it is also possible to use mixtures of the fertilizers mentioned above.

The size of the seeds to be surface-treated and the type of their surface, which are properties specific to a plant species, affect the quantity of fixing agent that is required for fixing the desired amount of fertilizer powder to the seed surface. Preferably, the fixing agent is used in an amount of 0.5-5 parts by weight (w/w) and the fertilizer in an amount of 1-25 parts by weight (w/w) per 100 parts by weight (w/w) of seeds. Especially preferably, the fixing agent is used in an amount of 1-3 parts by weight (w/w) and fertilizer in an amount of 3-15 parts by weight (w/w) per 100 parts by weight (w/w) of seeds.

Especially preferable coated seeds according to the invention include a coated barley seed that contains monopotassium phosphate in an amount of 4-10 % by weight; a coated wheat seed that contains monopotassium phosphate or monocalcium phosphate, or a mixture thereof, in an amount of 3-6 % by weight; a coated sunflower seed that contains monopotassium phosphate in an amount of 8-14 % by weight; a coated rape seed that contains monocalcium phosphate or dicalcium phosphate, or a mixture thereof, in an amount of 5-20 % by weight; a coated pea seed that contains monocalcium phosphate or dicalcium phosphate, or a mixture thereof in an amount of 3-7 % by weight; and a coated tomato seed that contains monopotassium phosphate or urea phosphate, or a mixture thereof, in an amount of 5-15 % by weight.

The said fixing agent may contain a fluid byproduct of agriculture or fermentation in an amount of 30-100 % by weight (w/w) and oil in an amount of 0-50 % by weight (w/w), any balance being water. The amount of oil is preferably 0-30 % by weight (w/w). Preferably the said fixing agent contains a fluid byproduct of agriculture or fermentation in an amount of 30-70 % by weight (w/w), oil in an amount of 10-30 % by weight (w/w), and water in an amount of 20-60 % by weight (w/w).

The said byproducts contain varying amounts of water.

The said fixing agent may also contain polymers conventionally used as fixing agents in seed coating and mentioned also in the description of the state of the art.

In addition to the fluid byproduct of agriculture or fermentation, the said fixing agent may contain an emulsified oil, which is typically an oil in water emulsion. Such an emulsion is prepared from oil, water and a dispersing agent. Conventional dispersing agents suitable for this purpose may be used as the dispersing agent.

The said fixing agent may also be made up of only an aqueous, fluid byproduct of agriculture or fermentation.

The said fixing agent may also contain conventional preservatives and/or pH control agents.

The said oil is preferably a biodegradable or readily biodegradable plant or animal oil or mineral oil, such as white oil, or a mixture thereof.

The said fertilizer powder may, in addition to the above-mentioned specific fertilizers, contain, for example, micronutrients and/or trace elements. One kilogram of fertilizer may contain, for example, 5-200 g of magnesium, 1-50 g of zinc, 1-50 g of manganese, 30-200 g of sodium, and/or 1-20 mg of selenium. The fertilizer powder may also contain other substances affecting plant growth, such as a pesticide and/or a growth control agent and/or a growth promoter.

The particle size of the said fertilizer powder is typically 1-100 µm, preferably 10 - 50 µm.

According to the invention there is also provided a process for coating plant seeds, the seeds being barley, wheat, sunflower, rape, pea or tomato seeds, in which method
a) the seeds to be coated are placed in an apparatus suitable for the treatment of seeds,
b) an aqueous fixing agent is added, which contains a fluid byproduct of agriculture or fermentation selected from molasses, vinasse or syrup, or a mixture thereof, and possibly an emulsified oil, so that a fixing agent layer is formed on the seed surfaces,
c) a fertilizer powder is added, which is monopotassium phosphate when the seed 5 being coated is barley seed; monopotassium phosphate or monocalcium phosphate when the seed being coated is wheat seed; monopotassium phosphate when the seed being coated is sunflower seed; monocalcium phosphate or dicalcium phosphate when the seed being coated is rape seed; monocalcium phosphate or dicalcium phosphate when the seed being coated is pea seed; or monopotassium phosphate or urea phosphate when the seed being coated is tomato seed, and thus a coating is formed.

The process does not require special apparatus; the treatment of seeds may be carried out in any apparatus suitable for the treatment of seeds, even in a concrete mixer.

According to a preferred embodiment, in step a) there are used 100 parts by weight (w/w) of the seeds to be coated, in step b) 0.5-5 parts by weight (w/w), preferably 1-3 % by weight (w/w), of the fixing agent, and in step c) 1-25 parts by weight (w/w), preferably 3-15 % by weight (w/w), of the fertilizer.

In the process according to the invention, the fixing agents and fertilizer powder and material amounts defined above are used. The seeds may have been treated by known methods, for example, with a pesticide, even before the surface treatment according to the invention. The adding of the pesticide and/or growth control agent and/or growth promoter may also take place after the fixing agent treatment according to the invention before the adding of the fertilizer powder, or only after the fertilizer powder treatment or simultaneously therewith.

According to the invention it is also possible to repeat the above-mentioned procedure according to the invention, whereby the thickness of the fertilizer layer around the seed can be increased.

If it is desired to pellet the seeds, water and a clay mineral are added after the treatment according to the invention or simultaneously therewith.

According to the invention there is even provided a process for improving the efficiency of plant phosphorus and for promoting plant growth during the early growth of the plant, in which process the plant seed, which is barley, wheat, sunflower, rape, pea or tomato seed, is coated with a coating which comprises
i) an aqueous fixing agent containing a fluid byproduct of agriculture or fermentation selected from molasses, vinasse or syrup, or a mixture thereof, and possibly an emulsified oil, and
ii) a fertilizer powder which is monopotassium phosphate when the seed being coated is barley seed; monopotassium phosphate or monocalcium phosphate when the seed being coated is wheat seed; monopotassium phosphate when the seed being coated is sunflower seed; monocalcium phosphate or dicalcium phosphate when the seed being coated is rape seed; monocalcium phosphate or dicalcium phosphate when the seed being coated is pea seed; or monopotassium phosphate or urea phosphate when the seed being coated is tomato seed,
in which case the said coating can be used for replacing, especially during the early development of the plant, a portion of the phosphorus fertilizer required by the plant, conventionally given as surface or row fertilization.

In this process according to the invention, the fixing agents and fertilizer powder and material amounts defined above are used.

Especially preferred coated seeds according to the invention are the following (the percentages are % by weight, calculated from the seed weight):
- barley seed containing 1-3 % of fixing agent and 4-10 % of MKP
- wheat seed containing 1-3 % of fixing agent and 3-6 % of MKP or MCP
- sunflower seed containing 1-3 % of fixing agent and 8-14 % of MKP
- rape seed containing 1-3 % of fixing agent and 5-20 % of MCP or DCP
- pea seed containing 1-3 % of fixing agent and 3-7 % of MCP or DCP
- tomato seed containing 1-3 % of fixing agent and 5-15 % of MKP or urea phosphate

The following examples are intended to describe the invention in greater detail.

### Example 1

### Effect of molasses added to an oil in water emulsion on the emergence of wheat seeds

A study was made of the effect of molasses present in an oil in water emulsion used for the surface treatment of seeds on the emergence of wheat seeds in emergence tests carried out in field soils when the seeds had been treated with emulsions containing molasses, water and oil at different ratios.

For purposes of the test, there was prepared a series of oil in water emulsions containing different amounts of molasses. Each emulsion contained 25 % by volume (v/v) of a biodegradable oil and additionally so much molasses that in the completed emulsions the volume ratio of oil in water to molasses was 4:0, 3:1, 2:2, 1:3 and 0:4.

For introducing the emulsion onto the seed surfaces, the seeds were treated in a commercial test seed-dressing device (Hege). From each surface-treated batch of seeds, 4 x 100 seeds were planted to germinate at a depth of 4 cm in 1-liter plastic pots filled with field soil. The controls were 100 untreated, similarly planted seeds. Each pot was watered at fixed intervals to maintain the soil moisture constant. When 11 days had elapsed from the planting, the emergence percentage was determined using the standard 5.4.A.3 defined by ISTA. The effect of the amount of molasses in the oil in water emulsion introduced onto the seed surface on the emergence of wheat seeds is shown in Table 1.

**Table 1**

| **Effect of the mixing ratio of aqueous oil to molasses on the emergence of wheat** | |
|---|---|
| **Test member** | **Emergence %** |
| Untreated | 93 |
| Molasses | 93 |
| Molasses : water + oil (1:3) | 89 |
| Molasses : water + oil (2:2) | 95 |
| Molasses : water + oil (3: 1) | 94 |
| Water + oil | 81 |

The results show that the adding of molasses to the oil in water emulsion significantly promoted the emergence of wheat. Furthermore, the fixing of the fertilizer powder to the seed surface was studied with the emulsions according to the example. It was observed that a molasses/oil/water emulsion fixed the fertilizer powder uniformly and better than the oil in water emulsion alone, and the technical quality was higher.

### Example 2

### Effect of the plant species and the phosphorus fertilizer source and amount on emergence

A number of tests were carried out with the purpose of finding for various plant species the optimal fertilizer and the optimal fertilizer amount in terms of emergence. In these tests the seeds of various plant species were treated in the manner described in Example 1, by using a fixing agent containing 12.5 % by weight (w/w) of oil, 37.5 % by weight (w/w) of water and 50 % by weight (w/w) of molasses. The fixing agent was used in an amount of 2 % of the weight of the seeds. The seeds treated in this manner were coated with monopotassium phosphate (MKP), monocalcium phosphate (MCP), dicalcium phosphate (DCP) or urea phosphate (UP). The fertilizer amounts used are shown in percentages in parentheses in Table 2 below. These percentages are % by weight, calculated from the seed weight.

Emergence tests were carried out in a substrate which had been given basic fertilization and which was the same for both the control and the test members. The results of the emergence tests are shown in Table 2, wherein the numeric values indicate the emergence percentage. Table 2 also indicates with an asterisk, species- and fertilizer-specifically, the best phosphorus uptake by a plant.

**Table 2**

| **Effect of phosphorus fertilizer source on the emergence of various plant species when seeds were coated according to the invention** | | | | | |
|---|---|---|---|---|---|
| **Plant species** | **Phosphorus fertilizer** | | | | |
| | **Uncoated control** | **MKP** | **MCP** | **DCP** | **UP** |
| Barley | 94 | 93 (6 %)* | 90 (6 %) | 95 (8 %) | Not suitable |
| Wheat | 91 | 85 (4 %)* | 92 (4 %) | 86 (5 %) | Not suitable |
| Sunflower | 87 | 87 (10 %)* | 82 (10 %) | 85(14%) | Not suitable |
| Rape | 100 | 85 (8 %) | 98 (8 %)* | 97 (14 %)* | Not suitable |
| Pea | 97 | 95 (4 %) | 98 (4 %)* | 100 (5 %)* | Not suitable |
| Tomato | 79 | 80 (10 %)* | 74 (10 %) | 74 (10 %) | 82 (10 %)* |

The results show that by using the seed coating process according to the invention, the best combined effect in terms of plant emergence and phosphorus uptake is achieved for barley with MKP, for wheat with MKP and MCP, for sunflower with MKP, for rape with MCP and DCP, for pea with MCP and DCP, and for tomato with MKP and urea phosphate.

### LITERATURE

Heydecker, W and Coolbear, P. 1977. Seed treatments for improved performance - survey and attempted prognosis. Seed Sci. and Technol. 5:353-425.
Rebafka, F.-P., Batino, A. and Marschner, H. 1993. Phosphorus seed coating increases phosphorus uptake, early growth and yield of pearl millet (Pennisetum glaucum (L). R. Br.) grown on an acid sandy soil in Niger, West Africa. Fert. Res. 35: 151-160.
Scott, J.M. 1975. Effects of seed coating on establishment. N.Z. Journal of Agricultural Research 18:59-67.
Scott, J.M., Jessop, R.S., Steer, R.J. and McLachlan, G.D. 1987. Effect of nutrient seed coating on the emergence of wheat and oats. Fert. Res. 14: 205-217.
International Seed Testing Association (ISTA). 1996. Seed Sci. & Technol. 24, Supplement. International Rules for seed testing. Zurich, Switzerland.

## Claims

1. Coated seed having a coating for improving the efficiency of phosphorus in plant nutrients at the early stage of plant growth, the seed being a barley, wheat, sunflower, rape, pea or tomato seed, **characterized in that** the coating comprises
i) an aqueous fixing agent containing a fluid byproduct of agriculture or fermentation selected from molasses, vinasse or syrup, or a mixture thereof, and possibly an emulsified oil, and
ii) a fertilizer powder, which is monopotassium phosphate for barley seed, monopotassium phosphate or monocalcium phosphate for wheat seed, monopotassium phosphate for sunflower seed, monocalcium phosphate or dicalcium phospate for rape seed, monocalcium phosphate or dicalcium phosphate for pea seed, or monopotassium phosphate or urea phosphate for tomato seed.

2. The coated seed according to Claim 1, **characterized in that** it contains 100 parts by weight (w/w) of seeds, 0.5-5 parts by weight (w/w) of the fixing agent, and 1-25 parts by weight (w/w) of the fertilizer.

3. The coated seed according to Claim 1 or 2, **characterized in that** it is a coated barley seed containing 4-10 % by weight of monopotassium phosphate; coated wheat seed containing 3-6 % by weight of monopotassium phosphate or monocalcium phosphate, or a mixture thereof; a coated sunflower seed containing 8-14 % by weight of monopotassium phosphate; a coated rape seed containing 5-20 % by weight of monocalcium phosphate or dicalcium phosphate, or a mixture thereof; a coated pea seed containing 3-7 % by weight of monocalcium phosphate or dicalcium phosphate, or a mixture thereof; or a coated tomato seed containing 5-15 % by weight of monopotassium phosphate or urea phosphate, or a mixture thereof.

4. The coated seed according to any of the preceding claims, **characterized in that** the said fixing agent contains 30-100 % by weight (w/w) of the fluid byproduct of agriculture or fermentation and 0-50 % by weight (w/w) of the oil, any balance being water, preferably 30-70 % by weight (w/w) of the fluid byproduct of agriculture or fermentation, 10-30 % by weight (w/w) of the oil and 20-60 % by weight (w/w) of water.

5. The coated seed according to any of the preceding claims, **characterized in that** the said oil is a biodegradable or readily biodegradable plant or animal oil or mineral oil, such as white oil, or a mixture thereof.

6. The coated seed according to any of the preceding claims, **characterized in that** the particle size of the said fertilizer powder is 1-100 µm, preferably 10-50 µm.

7. A process for coating a plant seed, the seed being a barley, wheat, sunflower, rape, pea or tomato seed, **characterized in that**
a) the seeds to be coated are placed in an apparatus suitable for the treatment of seeds,
b) an aqueous fixing agent is added, which contains a fluid byproduct of agriculture or fermentation selected from molasses, vinasse or syrup, or a mixture thereof, and possibly an emulsified oil, so that a fixing agent layer is formed on the seed surface,
c) a fertilizer powder is added, which, when the seed being coated is barley seed, is monopotassium phosphate; when the seed being coated is wheat seed, is monopotassium phosphate or monocalcium phosphate; when the seed being coated is sunflower seed, is monopotassium phosphate; when the seed being coated is rape seed, is monocalcium phosphate or dicalcium phosphate; when the seed being coated is pea seed, is monocalcium phosphate or dicalcium phosphate; or when the seed being coated is tomato seed, is monopotassium phosphate or urea phosphate, whereby a coating is formed.

8. The process according to Claim 7, **characterized in that** in step a) there are used 100 parts by weight (w/w) of the seeds to be coated, in step b) 0.5-5 parts by weight (w/w) of the fixing agent, and in step c) 1-25 parts by weight (w/w) of the fertilizer.

9. The process according to Claim 7 or 8, **characterized in that** the said fixing agent contains 30-100 % by weight (w/w) of the fluid byproduct of agriculture or fermentation and 0-50 % by weight (w/w) of oil, any balance being water, preferably 30-70 % by weight (w/w) of the fluid byproduct of agriculture or fermentation, 10-30 % by weight (w/w) of the oil, and 20-60 % by weight (w/w) of water.

10. The process according to any of Claims 7-9, **characterized in that** the said oil is a biodegradable or readily biodegradable plant or animal oil or mineral oil, such as white oil, or a mixture thereof

11. The process according to any of Claims 7-10, **characterized in that** the particle size of the said fertilizer powder is 1-100 µm, preferably 10-50 µm.

12. A process for improving the efficiency of plant phosphorus and for promoting plant growth during the early growth of the plant, **characterized in that** plant seed, which is barley, wheat, sunflower, rape, pea or tomato seed, is coated with a coating comprising
i) an aqueous fixing agent containing a fluid byproduct of agriculture or fermentation selected from molasses, vinasse or syrup, or a mixture thereof, and possibly an emulsified oil, and
ii) a fertilizer powder, which is monopotassium phosphate when the seed being coated is barley seed, monopotassium phosphate or monocalcium phosphate when the seed being coated is wheat seed, monopotassium phosphate when the seed being coated is sunflower seed, monocalcium phosphate or dicalcium phospate when the seed being coated is rape seed, monocalcium phosphate or dicalcium phosphate when the seed being coated is pea seed, or monopotassium phosphate or urea phosphate when the seed being treated is tomato seed,
in which case the said coating can be used for replacing a portion of the phosphorus fertilizer required by the plant, conventionally given as surface or row application, especially during the early development of the plant.

## Patentansprüche

1. Beschichteter Samen mit einer Beschichtung zur Verbesserung der Wirksamkeit von Phosphor in Pflanzennährstoffen im Frühstadium des Pflanzenwachstums, wobei der Samen ein Gersten-, Weizen-, Sonnenblumen-, Raps-, Erbsen- oder Tomatensamen ist, **dadurch gekennzeichnet, dass** die Beschichtung enthält:
i) ein wässriges Fixiermittel, das ein flüssiges Nebenprodukt der Landwirtschaft oder Fermentation enthält, ausgewählt aus Melasse, Gärungsschlempe (Vinasse) oder Sirup oder einer Mischung davon, und gegebenenfalls ein emulgierendes Öl, und
ii) ein Düngemittelpulver, welches Monokaliumphosphat für Gerstensamen, Monokaliumphosphat oder Monocalciumphosphat für Weizensamen, Monokaliumphosphat für Sonnenblumensamen, Monocalciumphosphat oder Dicalciumphosphat für Rapssamen, Monocalciumphosphat oder Dicalciumphosphat für Erbsensamen oder Monokaliumphosphat oder Harnstoffphosphat für Tomatensamen ist.

2. Beschichteter Samen nach Anspruch 1, **dadurch gekennzeichnet, dass** dieser, bezogen auf 100 Gewichtsteile (w/w) des Samens, 0,5 - 5 Gewichtsteile des Fixiermittels und 1 - 25 Gewichtsteile des Düngemittels enthält.

3. Beschichteter Samen nach Anspruch 1 oder 2, **dadurch gekennzeichnet, dass** der Samen beschichteter Gerstensamen, enthaltend 4 - 10 Gewichts-% Monokaliumphosphat, beschichteter Weizensamen, enthaltend 3 - 6 Gewichts-% Monokaliumphosphat oder Monocalciumphosphat oder eine Mischung davon, beschichteter Sonnenblumensamen, enthaltend 8 -14 Gewichts-% Monokaliumphosphat, beschichteter Rapssamen, enthaltend 5 - 20 Gewichts-% Monocalciumphosphat oder Dicalciumphosphat oder eine Mischung davon, beschichteter Erbsensamen, enthaltend 3 - 7 Gewichts-% Monocalciumphosphat oder Dicalciumphosphat oder eine Mischung davon, oder beschichteter Tomatensamen, enthaltend 5 - 15 Gewichts-% Monokaliumphosphat oder Harnstoffphosphat oder eine Mischung davon, ist.

4. Beschichteter Samen nach einem der vorstehenden Ansprüche, **dadurch gekennzeichnet, dass** das Fixiermittel 30 - 100 Gewichts-% (w/w) flüssiges Nebenprodukt der Landwirtschaft oder Fermentation und 0 - 50 Gewichts-% (w/w) Öl sowie in beliebiger Menge zum Ausgleich bestimmtes Wasser, vorzugsweise 30 - 70 Gewichts-% (w/w) flüssiges Nebenprodukt der Landwirtschaft oder Fermentation, 10 - 30 Gewichts-% (w/w) Öl und 20 - 60 Gewichts-% Wasser enthält.

5. Beschichteter Samen nach einem der vorstehenden Ansprüche, **dadurch gekennzeichnet, dass** das Öl ein bioabbaubares oder leicht bioabbaubares Pflanzen- oder Tieröl oder Mineralöl, wie Weißöl, oder eine Mischung davon ist.

6. Beschichteter Samen nach einem der vorstehenden Ansprüche, **dadurch gekennzeichnet, dass** die Partikelgröße des Düngemittelpulvers 1 - 100 µm, vorzugsweise 10 - 50 µm, beträgt.

7. Verfahren zum Beschichten von Pflanzensamen, wobei der Samen ein Gersten-, Weizen-, Sonnenblumen-, Raps-, Erbsen- oder Tomatensamen ist, **dadurch gekennzeichnet, dass**
a) der zu beschichtende Samen in eine Vorrichtung eingebracht wird, die zum Behandeln von Samen geeignet ist,
b) ein flüssiges Fixiermittel zugesetzt wird, welches ein flüssiges Nebenprodukt der Landwirtschaft oder Fermentation, ausgewählt aus Melasse, Gärungsschlempe (Vinasse) oder Sirup oder einer Mischung davon, und gegebenenfalls ein emulgierendes Öl enthält, so dass eine Fixiermittelschicht auf der Samenoberfläche gebildet wird,
c) ein Düngemittelpulver zugesetzt wird, welches, wenn der beschichtete Samen Gerstensamen ist, Monokaliumphosphat, wenn der beschichtete Samen Weizensamen ist, Monokaliumphosphat oder Monocalciumphosphat, wenn der beschichtete Samen Sonnenblumensamen ist, Monokaliumphosphat, wenn der beschichtete Samen Rapssamen ist, Monocalciumphosphat oder Dicalciumphosphat, wenn der beschichtete Samen Erbsensamen ist, Monocalciumphosphat oder Dicalciumphosphat oder, wenn der beschichtete Samen Tomatensamen ist, Monokaliumphosphat oder Harnstoffphosphat ist.

8. Verfahren nach Anspruch 7, **dadurch gekennzeichnet, dass** in Schritt a) 100 Gewichtsteile (w/w) des zu beschichtenden Samens; in Schritt b) 0,5 - 5 Gewichtsteile (w/w) des Fixiermittels und in Schritt c) 1 - 25 Gewichtsteile (w/w) des Düngemittels verwendet werden.

9. Verfahren nach einem der Ansprüche 7 oder 8, **dadurch gekennzeichnet, dass** das Fixiermittel 30 - 100 Gewichts-% (w/w) flüssiges Nebenprodukt der Landwirtschaft oder Fermentation und 0 - 50 Gewichts-% (w/w) Öl sowie in beliebiger Menge zum Ausgleich bestimmtes Wasser, vorzugsweise 30 - 70 Gewichts-% (w/w) flüssiges Nebenprodukt der Landwirtschaft oder Fermentation, 10 - 30 Gewichts-% (w/w) Öl und 20 - 60 Gewichts-% Wasser enthält.

10. Verfahren nach einem der Ansprüche 7 - 9, **dadurch gekennzeichnet, dass** das Öl ein bioabbaubares oder leicht bioabbaubares Pflanzen- oder Tieröl oder Mineralöl, wie Weißöl, oder eine Mischung davon ist.

11. Verfahren nach einem der Ansprüche 7 - 10, **dadurch gekennzeichnet, dass** die Partikelgröße des Düngemittelpulvers 1 - 100 µm, vorzugsweise 10 - 50 µm, beträgt.

12. Verfahren zur Verbesserung der Wirksamkeit von Pflanzenphosphor und zur Förderung des Pflanzenwachstums während des Frühstadiums der Pflanze, **dadurch gekennzeichnet, dass** Pflanzensamen, welcher Gersten-, Weizen-, Sonnenblumen-, Raps-, Erbsen- oder Tomatensamen ist, mit einer Beschichtung beschichtet wird, enthaltend:
i) ein wässriges Fixiermittel, das ein flüssiges Nebenprodukt der Landwirtschaft oder Fermentation, ausgewählt aus Melasse, Gärungsschlempe (Vinasse) oder Sirup oder eine Mischung davon, und gegebenenfalls ein emulgierendes Öl enthält, und
ii) ein Düngemittelpulver, welches Monokaliumphosphat ist, wenn der beschichtete Samen Gerstensamen ist, Monokaliumphosphat oder Monocalciumphosphat ist, wenn der beschichtete Samen Weizensamen ist, Monokaliumphosphat ist, wenn der beschichtete Samen Sonnenblumensamen ist, Monocalciumphosphat oder Dicalciumphosphat ist, wenn der beschichtete Samen Rapssamen ist, Monocalciumphosphat oder Dicalciumphosphat ist, wenn der beschichtete Samen Erbsensamen ist, oder Monokaliumphosphat oder Harnstoffphosphat ist, wenn der beschichtete Samen Tomatensamen ist,
so dass die Beschichtung zum Ersatz eines Teils des von der Pflanze benötigten Phosphor-Düngemittels besonders während der frühen Entwicklung der Pflanze, konventionell in einer Oberflächen- oder Furchenanwendung gegeben, verwendet werden kann.

## Revendications

1. Semence pelliculée comportant un enrobage destiné à améliorer l'efficacité du phosphore dans les nutriments pour plantes au premier stade de la croissance végétale, la semence étant une semence d'orge, de blé, de tournesol, de navette, de pois ou de tomate, **caractérisée en ce que** l'enrobage comprend
i) un agent liant aqueux contenant un sous-produit fluide de l'agriculture ou de la fermentation choisi parmi la mélasse, la vinasse ou le sirop, ou un mélange de ceux-ci, et éventuellement une huile émulsionnée, et
ii) une poudre fertilisante, qui est du phosphate de monopotassium pour la semence d'orge, du phosphate de monopotassium ou du phosphate de monocalcium pour la semence de blé, du phosphate de monopotassium pour la semence de tournesol, du phosphate de monocalcium ou du phosphate de dicalcium pour la semence de navette, du phosphate de monocalcium ou du phosphate de dicalcium pour la semence de pois, ou du phosphate de monopotassium ou du phosphate d'urée pour la semence de tomate.

2. Semence pelliculée selon la revendication 1, **caractérisée en ce qu'**elle contient 100 parties en poids (p/p) de semences, 0,5 à 5 parties en poids (p/p) de l'agent liant, et 1 à 25 parties en poids (p/p) du fertilisant.

3. Semence pelliculée selon la revendication 1 ou 2, **caractérisée en ce qu'**elle est une semence d'orge pelliculée contenant 4 à 10 % en poids de phosphate de monopotassium ; une semence de blé pelliculée contenant 3 à 6 % en poids de phosphate de monopotassium ou de phosphate de monocalcium, ou un mélange de ceux-ci ; une semence de tournesol pelliculée contenant 8 à 14 % en poids de phosphate de monopotassium ; une semence de navette pelliculée contenant 5 à 20 % en poids de phosphate de monocalcium ou de phosphate de dicalcium, ou un mélange de ceux-ci ; une semence de pois pelliculée contenant 3 à 7 % en poids de phosphate de monocalcium ou de phosphate de dicalcium, ou un mélange de ceux-ci ; ou une semence de tomate pelliculée contenant 5 à 15 % en poids de phosphate de monopotassium ou de phosphate d'urée, ou un mélange de ceux-ci.

4. Semence pelliculée selon l'une quelconque des revendications précédentes, **caractérisée en ce que** ledit agent liant contient 30 à 100 % en poids (p/p) du sous-produit fluide de l'agriculture ou de la fermentation et 0 à 50 % en poids (p/p) de l'huile, tout reste étant de l'eau, de préférence 30 à 70 % en poids (p/p) du sous-produit fluide de l'agriculture ou de la fermentation, 10 à 30 % en poids (p/p) de l'huile et 20-60 % en poids (p/p) d'eau.

5. Semence pelliculée selon l'une quelconque des revendications précédentes, **caractérisée en ce que** ladite huile est une huile végétale ou animale biodégradable ou facilement biodégradable ou une huile minérale, telle que l'huile blanche, ou un mélange de celles-ci.

6. Semence pelliculée selon l'une quelconque des revendications précédentes, **caractérisée en ce que** la taille des particules de ladite poudre fertilisante est de 1 à 100 µm, de préférence de 10 à 50 µm.

7. Procédé d'enrobage d'une semence de plante, la semence étant une semence d'orge, de blé, de tournesol, de navette, de pois ou de tomate, **caractérisé en ce que**
a) les semences à enrober sont placées dans un appareil adapté pour le traitement des semences,
b) un agent liant aqueux est ajouté, lequel contient un sous-produit fluide de l'agriculture ou de la fermentation choisi parmi la mélasse, la vinasse ou le sirop, ou un mélange de ceux-ci, et éventuellement une huile émulsionnée, de sorte qu'une couche d'agent liant est formée sur la surface de la semence,
c) une poudre fertilisante est ajoutée, laquelle, lorsque la semence en cours d'enrobage est de la semence d'orge, est du phosphate de monopotassium ; lorsque la semence en cours d'enrobage est de la semence de blé, est du phosphate de monopotassium ou du phosphate de monocalcium ; lorsque la semence en cours d'enrobage est de la semence de tournesol, est du phosphate de monopotassium ; lorsque la semence en cours d'enrobage est de la semence de navette, est du phosphate de monocalcium ou du phosphate de dicalcium ; lorsque la semence en cours d'enrobage est de la semence de pois, est du phosphate de monocalcium ou du phosphate de dicalcium ; ou lorsque la semence en cours d'enrobage est de la semence de tomate, est du phosphate de monopotassium ou du phosphate d'urée, de sorte qu'un enrobage est formé.

8. Procédé selon la revendication 7, **caractérisé en ce que** dans l'étape a) sont utilisées 100 parties en poids (p/p) des semences à enrober, dans l'étape b) 0,5 à 5 parties en poids (p/p) de l'agent liant, et dans l'étape c) 1 à 25 parties en poids (p/p) du fertilisant.

9. Procédé selon la revendication 7 ou 8, **caractérisé en ce que** ledit agent liant contient 30 à 100 % en poids (p/p) du sous-produit fluide de l'agriculture ou de la fermentation et 0 à 50 % en poids (p/p) d'huile, tout le reste étant de l'eau, de préférence 30 à 70 % en poids (p/p) du sous-produit fluide de l'agriculture ou de la fermentation, 10 à 30 % en poids (p/p) de l'huile et 20 à 60 % en poids (p/p) d'eau.

10. Procédé selon l'une quelconque des revendications 7 à 9, **caractérisé en ce que** ladite huile est une huile végétale ou animale biodégradable ou facilement biodégradable ou une huile minérale, telle que l'huile blanche, ou un mélange de celles-ci.

11. Procédé selon l'une quelconque des revendications 7 à 10, **caractérisé en ce que** la taille des particules de ladite poudre fertilisante est de 1 à 100 µm, de préférence de 10 à 50 µm.

12. Procédé permettant d'améliorer l'efficacité du phosphore végétal et de promouvoir la croissance végétale au début de la croissance de la plante, **caractérisé en ce que** la semence végétale, qui est de la semence d'orge, de blé, de tournesol, de navette, de pois ou de tomate, est enrobée avec un enrobage comprenant
i) un agent liant aqueux contenant un sous-produit fluide de l'agriculture ou de la fermentation choisi parmi la mélasse, la vinasse ou le sirop, ou un mélange de ceux-ci, et éventuellement une huile émulsionnée, et
ii) une poudre fertilisante, qui est du phosphate de monopotassium lorsque la semence en cours d'enrobage est de la semence d'orge, du phosphate de monopotassium ou du phosphate de monocalcium lorsque la semence en cours d'enrobage est de la semence de blé, du phosphate de monopotassium lorsque la semence en cours d'enrobage est de la semence de tournesol, du phosphate de monocalcium ou du phosphate de dicalcium lorsque la semence en cours d'enrobage est de la semence de navette, du phosphate de monocalcium ou du phosphate de dicalcium lorsque la semence en cours d'enrobage est de la semence de pois, ou du phosphate de monopotassium ou du phosphate d'urée lorsque la semence en cours d'enrobage est de la semence de tomate,
auquel cas ledit enrobage peut être utilisé pour remplacer une partie du fertilisant phosphoré nécessaire à la plante, donné traditionnellement sous forme d'application en surface ou en ligne, particulièrement au début du développement de la plante.
